# EUROPÄISCHE PATENTANMELDUNG

(11) **EP 4 015 722 A1**
(43) Veröffentlichungstag der Anmeldung: **22.06.2022**
(21) Anmeldenummer: 21215099.9
(22) Anmeldetag: 16.12.2021
(51) Int. Cl.: E03F 3/06, F16L 55/18

(54) **VERFAHREN ZUM SANIEREN EINES KANALS**

(30) Priorität: 16.12.2020 DE 102020216076
(71) Anmelder: Geiger Kanaltechnik GmbH & Co. KG, 87561 Oberstdorf (DE)
(72) Erfinder: GEIGER, Willi, 87561 Oberstdorf (DE)
(74) Vertreter: BRP Renaud & Partner mbB Rechtsanwälte Patentanwälte Steuerberater

(57) **Zusammenfassung**

Die Erfindung betrifft ein Verfahren zum Sanieren eines Kanals (1), der über einen abzweigenden Zugangsschacht (2) mit einer äußeren Umgebung (3) fluidisch verbunden ist, wobei der Kanal (1) entlang einer Kanalströmungsrichtung (R) von einer Flüssigkeit (F) durchströmbar ist, umfassend nachfolgende Maßnahmen: a) Festlegen eines mit dem Zugangsschacht (2) fluidisch kommunizierenden Sanierungsabschnitts (4) des Kanals (1), wobei ein Sackfilter (5) an einem bezüglich der Kanalströmungsrichtung (R) stromab gelegenen Ende (8) des Sanierungsabschnitts (4) angeordnet wird; b) Einbringen eines Sanierungsroboters (11) in den Sanierungsabschnitt (4) über den Zugangsschacht (2); c) Sanieren des Sanierungsabschnitts (4) des Kanals (1) mittels des Sanierungsroboters (11).

## Beschreibung

Die Erfindung betrifft ein Verfahren zum Sanieren eines Kanals.

Das Sanieren eines Kanals, beispielsweise eines Abwasserkanals, umfasst typischerweise ein abrasives Bearbeiten einer den Kanal begrenzenden Kanalwand. In Folge einer solchen abrasiven Bearbeitung der Kanalwand werden von einem Material der Kanalwand gewöhnlich Ablösungen in Form von Partikeln abgetragen. Solche Ablösungen sind aber oftmals umweit- und gesundheitsschädlich, insbesondere wenn die abrasiv bearbeitete Kanalwand aus asbesthaltigem Material wie Asbestbeton besteht. Es gilt also, solche Ablösungen von der Umwelt fernzuhalten.

Es ist daher eine Aufgabe der vorliegenden Erfindung, ein verbessertes Verfahren zum Sanieren eines Kanals anzugeben, das der voranstehenden Problematik Rechnung trägt.

Diese Aufgabe wird durch das Verfahren gemäß dem unabhängigen Patentanspruch 1 gelöst. Bevorzugte Ausdrucksformen sind Gegenstand der abhängigen Patentansprüche.

Grundidee der Erfindung ist demnach, einen Sanierungsabschnitt, in welchem ein Kanal saniert wird, mittels eines Sackfilters festzulegen bzw. zu begrenzen. Dabei wird der Sackfilter an einem bezüglich einer Kanalströmungsrichtung des Kanals stromab gelegenen Ende des Sanierungsabschnitts angeordnet, sodass beim Sanieren von einer den Kanal begrenzenden Kanalwand abgelöste Ablösungen zumindest großteils, vorzugsweise vollständig, im Sackfilter aufgefangen werden können, bevor die Ablösungen den Sanierungsabschnitt verlassen und in unerwünschter Weise in eine äußere Umgebung des Kanals gelangen. Zur äußeren Umgebung kann hierbei eine sich fluidisch an den Kanal anschließende Kläranlage gezählt werden.

Damit lässt sich vorteilhaft sicherstellen, dass zumindest nur ein stark verminderter Anteil der beim Sanieren anfallenden Ablösungen oder sogar alle dieser Ablösungen in die die äußere Umgebung gelangen und dort ihre umweltschädliche und gesundheitsschädliche Wirkung entfalten.

Die Erfindung betrifft ein Verfahren zum, insbesondere abschnittsweisen, Sanieren eines Kanals, der über einen abzweigenden Zugangsschacht mit einer äußeren Umgebung fluidisch verbunden ist, wobei der Kanal entlang einer Kanalströmungsrichtung, in welcher der Kanal bevorzugt abschüssig ist, von einer Flüssigkeit durchströmbar ist. Das "Sanieren" des Kanals kann in diesem Zusammenhang - jeweils alternativ oder zusätzlich zueinander - ein Inspizieren des Kanals, ein Reinigen des Kanals, ein Beseitigen von Hindernissen aus dem Kanal, ein Reparieren des Kanals sowie ein Renovieren des Kanals umfassen. Die Flüssigkeit kann Abwasser sein. Der Kanal kann also ein Abwasserkanal sein. Es versteht sich, dass von der Flüssigkeit auch Festanteile mitgeschwemmt werden können. Bevorzugt durchströmt die Flüssigkeit den Kanal schwerkraftgetrieben.

Das erfindungsgemäße Verfahren umfasst drei Maßnahmen a) bis c). Gemäß einer ersten Maßnahme a) erfolgt ein Festlegen eines mit dem Zugangsschacht fluidisch kommunizierenden Sanierungsabschnitts des Kanals, wobei ein Sackfilter mit einer wasserdurchlässigen Hülle, die einen Sackinnenraum begrenzt, an einem bezüglich der Kanalströmungsrichtung stromab gelegenen Ende des Sanierungsabschnitts angeordnet wird, sodass eine Rohseite des Sackfilters, an der der Sackinnenraum des Sackfilters geöffnet ist, dem Sanierungsabschnitt zugewandt und eine Reinseite des Sackfilters dem Sanierungsabschnitt abgewandt ist. Der Sackfilter bzw. seine Hülle trennt also die Rohseite von der Reinseite.

Das erfindungsgemäße Verfahren umfasst außerdem eine zweite Maßnahme b), gemäß welcher ein Sanierungsroboter über den Zugangsschacht in den Sanierungsabschnitt eingebracht wird. Darüber hinaus umfasst das Verfahren eine dritte Maßnahme c), in welcher ein Sanieren des Sanierungsabschnitts des Kanals mittels des Sanierungsroboters erfolgt. Unter "Sanieren des Sanierungsabschnitts" ist dabei zu verstehen, dass der Kanal wenigstens lokal innerhalb des Sanierungsabschnitts saniert wird. Sanierungsarbeiten beim Sanieren des Sanierungsabschnitts können also in einem Unterabschnitt des Sanierungsabschnitts oder im gesamten Sanierungsabschnitt vorgenommen werden. Da der Sackfilter den Sanierungsabschnitt am stromab gelegenen Ende begrenzt, können die Sanierungsarbeiten beim Sanieren des Sanierungsabschnitts also stromauf, mit Abstand zum oder direkt bis hin zum Sackfilter erfolgen. Der Sanierungsroboter wird bevorzugt von der äußeren Umgebung des Kanals aus ferngesteuert. Optional kann das Verfahren eine vierte Maßnahme d) umfassen, gemäß welcher der Sanierungsroboter über den Zugangsschacht wieder aus dem Kanal entfernt wird.

Wie oben bereits angedeutet erlaubt es das Verfahren gemäß der Erfindung beim Sanieren des Kanals von der Kanalwand abgelöste Ablösungen wenigstens großteils, idealerweise sogar vollständig, vor einem Austrag in die äußere Umgebung und damit in die Umwelt zu bewahren.

In einer bevorzugten Weiterbildung des Verfahrens umfasst die Maßnahme a) zwei Untermaßnahmen a1) und a2). Gemäß der Untermaßnahme a1) wird eine, insbesondere flüssigkeitsundurchlässige, Staueinrichtung an einem bezüglich der Kanalströmungsrichtung stromauf gelegenen Ende des Sanierungsabschnitts angeordnet, wobei die Staueinrichtung vorzugsweise über den Zugangsschacht in den Kanal eingebracht wird. Gemäß der Untermaßnahme a2) erfolgt ein Anstauen der Flüssigkeit stromauf der Staueinrichtung, sodass ein Pegel an Flüssigkeit im Sanierungsabschnitt reduziert wird. Dies vereinfacht die Durchführung von Sanierungsarbeiten mittels des Sanierungsroboters in nicht unerheblichem Maße. Es versteht sich, dass auf die Maßnahmen a1) und a2) insbesondere dann verzichtet werden kann, wenn der Kanal momentan - also zum Zeitpunkt des Sanierens - ohnehin kaum oder keine Flüssigkeit führt.

Gemäß einer weiteren bevorzugten Weiterbildung des Verfahrens umfasst die Maßnahme c) eine Untermaßnahme c1), gemäß welcher ein nasses und abrasives Behandeln, insbesondere Abfräsen, einer Kanalwand, bevorzugt mit oder aus asbesthaltigem Material, besonders bevorzugt mit oder aus Asbestbeton, des Kanals erfolgt. Mit dem abrasiven Behandeln der Kanalwand kann ein teilweises Abtragen eines Materials derselben einhergehen. Somit können Schadstellen in der Kanalwand für eine Ausbesserung vorbereitet und einen Kanaldurchmesser reduzierende Ablagerungen beseitigt werden.

Zweckmäßig erfolgt das nasse abrasive Behandeln in Maßnahme c1) mittels Wasser, sowie vorzugsweise mechanisch, wobei beim abrasiven Behandeln anfallende Ablösungen von der Kanalwand mittels des Wassers von der Kanalwand abgespült werden. Das nasse abrasive Behandeln erfolgt in Maßnahme c1) bevorzugt mittels wenigstens eines Fräswerkzeugs des Reinigungsroboters unter Zugabe des Wassers. Damit lässt sich sicherstellen, dass nach dem Sanieren allenfalls wenige, vorzugweise keine, umweit- und gesundheitsschädlichen Ablösungen an der Kanalwand haften bleiben, die andernfalls im Laufe der Zeit in die äußere Umgebung gelangen könnten. Das nasse abrasive Behandeln kann dazu dienen, eine schadhafte Stelle der Kanalwand von losen bzw. lockeren Teilen der Kanalwand zu befreien, um eine gute Haftung eines im Anschluss an das nasse abrasive Behandeln in die schadhafte Stelle im Zuge des Sanierens eingefügten Füllmaterials wie Epoxidharz o. ä. sicher zu stellen.

Bei einer weiteren vorteilhaften Weiterbildung des Verfahrens ist vorgesehen, dass die Maßnahme c) eine weitere Untermaßnahme c2) umfasst. Gemäß der Untermaßnahme c2) wird das Wasser mitsamt den davon mitgeführten Ablösungen in der Kanalströmungsrichtung durch den Sanierungsabschnitt des Kanals geleitet. Das Wasser kann also in Untermaßnahme c2) mitsamt den davon mitgeführten Ablösungen durch den Sanierungsabschnitt gespült werden. Dies erlaubt einen besonders einfach zu realisierenden Abtransport der umweit- und gesundheitsschädlichen Ablösungen.

Gemäß einer weiteren bevorzugten Weiterbildung des Verfahrens umfasst die Maßnahme c) eine weitere Untermaßnahme c3). Gemäß der Untermaßnahme c3) erfolgt ein Filtern der Ablösungen aus dem dieselben mitführenden Wasser mittels des Sackfilters, sodass die Ablösungen, insbesondere deren asbesthaltigen Anteile, an der Rohseite des Sackfilters, insbesondere im Sackinnenraum, gesammelt werden. Somit können die Ablösungen nach Beendigung der Sanierung des Sanierungsabschnitts mitsamt dem Sackfilter gebündelt entfernt werden. Der Sackfilter besticht dabei in seiner einfachen Handhabbarkeit.

Bei einer weiteren bevorzugten Weiterbildung des Verfahrens umfasst die Hülle des Sackfilters ein Filtermedium oder besteht aus dem Filtermedium. Alternativ oder zusätzlich wird/ist der Sackinnenraum wenigstens teilweise mit einem, insbesondere schüttfähigen, Filtermittel befüllt. Dabei ist das Filtermedium bzw. das Filtermittel für die Flüssigkeit und für das Wasser durchlässig und für die Ablösungen, insbesondere asbesthaltige Anteile der Ablösungen, undurchlässig. Dies erlaubt eine besonders wirksame Abscheidung der Ablösungen aus dem Wasser bzw. der Flüssigkeit. Außerdem kann so vermieden werden, dass das Wasser bzw. die Flüssigkeit sich am stromab gelegenen Ende des Sanierungsabschnitts zu stark anstauen.

Gemäß einer weiteren vorteilhaften Weiterbildung des Verfahrens umfasst dasselbe eine weitere Maßnahme e), in welcher der Sackfilter über den Zugangsschacht oder einen stromab gelegenen fluidisch mit dem Kanal kommunizierenden Parallelschacht entfernt wird. Damit lässt sich der Kanal nach seiner Sanierung besonders einfach wieder in seinen funktionstüchtigen Zustand versetzen.

Es versteht sich, dass sich der vom Kanal abzweigende Zugangsschacht bzw. der vom Kanal abzweigende Parallelschacht in einem Mittenbereich des Kanals winkelig zum Kanal an den Kanal fluidisch anschließen kann - oder, dass sich der vom Kanal abzweigende Zugangsschacht bzw. der vom Kanal abzweigende Parallelschacht, insbesondere fluchtend, an einen Ursprung bzw. an ein Ende des Kanals fluidisch an den Kanal anschließen kann. Selbstverständlich kann auch einer von Zugangs- und Parallelschacht im Mittenbereich des Kanals winkelig an den Kanal angeschlossen sein, wobei der andere von Zugangs- und Parallelschacht sich an den Ursprung bzw. an das Ende des Kanals, insbesondere fluchtend, fluidisch anschließt. Sofern auf einen Parallelschacht verzichtet ist, kann für die Anordnung des Zugangsschachts relativ zur Kanal das voranstehend Festgelegte mutatis mutandis gelten.

Bei einer weiteren bevorzugten Weiterbildung des Verfahrens erfolgt eine Handhabung des Sackfilters innerhalb des Kanals in Maßnahme a) sowie - alternativ oder zusätzlich - in Maßnahme e) mittels des Sanierungsroboters. Insbesondere kann das Sackfilter vor Durchführung von Maßnahme c) mittels des Sanierungsroboters zum Ende des Sanierungsabschnitts transportiert werden.

Auch die Handhabung der Staueinrichtung im Kanal kann mittels des Sanierungsroboters erfolgen. Vorteilhaft lässt sich damit erreichen, dass die gesamte Sanierung des Kanals vorgenommen werden kann, ohne dass ein Werker in den Kanal steigen muss. Dies macht die Kanalsanierung für den Werker komfortabler und sicherer.

Gemäß einer weiteren vorteilhaften Weiterbildung des Verfahrens umfasst die Maßnahme a) eine weitere Untermaßnahme a0). Bevorzugt wird die Untermaßnahme a0) ganz zu Beginn des Verfahrens durchgeführt. Gemäß der Untermaßnahme a0) wird eine Schachtöffnung des Zugangsschachts, mittels welcher der Zugangsschacht mit der äußeren Umgebung verbunden ist, freigelegt. Damit wird die Zugänglichkeit des Kanals über den Zugangsschacht zum Einbringen des Sanierungsroboters sowie des Sackfilters und gegebenenfalls der Staueinrichtung in den Kanal gewährleistet.

Zweckmäßig wird der Sackfilter in Untermaßnahme a0) oder/und in Untermaßnahme e) mittels einer kescherartigen Vorrichtung gehandhabt. Die kescherartige Vorrichtung umfasst vorzugsweise einen Stiel, dessen Länge bevorzugt wenigstens einer Schachtlänge des Zugangsschachts bzw. des Parallelschachts entspricht. Entlang der Schachtlänge verbindet der Zugangsschacht bzw. der Parallelschacht den Kanal mit der äußeren Umgebung. Der Stiel kann ein Teleskopstiel mit variabel einstellbarer Länge sein. Die kescherartige Vorrichtung kann an einem Ende des Stiels eine Halteeinrichtung aufweisen, in welcher der Sackfilter zu seiner Handhabung gehalten werden kann. Die Halteeinrichtung kann ein Netz umfassen, mittels welchem der Sackfilter eingefangen werden kann. Vorteilhaft lässt sich mittels der kescherartigen Vorrichtung der Sackfilter von der äußeren Umgebung des Kanals her handhaben, sodass ein Werker zum Installieren bzw. Deinstallieren des Sackfilters nicht in den Zugangs- bzw. Parallelschacht und auch nicht in den Kanal steigen muss. Dies erweist sich als besonders komfortabel und unter arbeitssicherheitstechnischen Aspekten vorteilhaft für den Werker.

Auch die Staueinrichtung kann, insbesondere in Maßnahme a1), mittels der kescherartigen Vorrichtung gehandhabt werden, wobei sich dieselben voranstehend angemerkten Vorteile ergeben. Selbstverständlich kann die Staueinrichtung in Maßnahme a1) alternativ auch mittels einer anderen Vorrichtung von der äußeren Umgebung her gehandhabt werden.

Ferner kann auch der Sanierungsroboter, insbesondere in der optionalen Maßnahme d), mittels der kescherartigen Vorrichtung gehandhabt werden, wobei sich dieselben voranstehend angeführten Vorteile ergeben. Selbstverständlich kann der Sanierungsroboter alternativ in Maßnahme d) auch mittels einer anderen Vorrichtung von der äußeren Umgebung her gehandhabt werden.

Bei einer weiteren bevorzugten Weiterbildung des Verfahrens umfasst die Maßnahme b) eine Untermaßnahme b1), gemäß welcher ein Erzeugen und Aufrechterhalten eines Wasserschleiers erfolgt, der eine Schachtöffnung des Zugangsschachtes für Aerosole, insbesondere asbesthaltige Aerosole, zumindest teilweise, vorzugsweise vollständig, undurchlässig verschließt. Die Untermaßnahme b1) wird bevorzugt zeitlich nach dem Einbringen des Sanierungsroboters in den Sanierungsabschnitt durchgeführt. Ein solcher Wasserschleier oder zumindest ein Teil desselben kann dabei eine Vielzahl an zusammenhängenden oder getrennten Wassertropfen umfassen, die flächenartig ausgebildet sind und eine Trennfläche zwischen Kanalatmosphäre und Außenatmosphäre bilden. Vorliegend ist unter dem Begriff "Wasserschleier" auch ein volumenartig ausgebildeter Wassernebel, der eine Vielzahl an zusammenhängenden oder getrennten Wassertropfen umfasst, deren Vorhandensein im Bereich einer den Wasserschleier umfassenden oder ausbildenden Schleierwolke wahrscheinlicher ist als außerhalb der Schleierwolke. Auch eine Kombination aus beiden voranstehend genannten Varianten ist möglich. Besagte Aerosole können beim nassen und abrasiven Behandeln der Kanalwand in Maßnahme c1) anfallen. Falls die Kanalwand asbesthaltiges Material wie Asbestbeton umfasst oder aus asbesthaltigem Material wie Asbestbeton besteht, können die Aerosole asbesthaltig sein. Die Aerosole können schwebfähige Staubkörnchen oder Flüssigkeitströpfchen sein, die beim Sanieren des Kanals infolge abrasiver Bearbeitung der Kanalwand des Kanals anfallen. Vorteilhaft lässt sich mittels des Wasserschleiers vermeiden oder zumindest vermindern, dass beim Sanieren des Kanals anfallende Aerosole aus einer im Kanal und im Zugangsschacht vorhandenen Kanalatmosphäre in eine in der äußeren Umwelt vorhandene Außenatmosphäre gelangen, da die Aerosole, wenn sie in Kontakt mit den Wassertropfen des Wasserschleiers kommen, an den Wassertropfen des Wasserschleiers gebunden werden. Infolge einer solchen Bindung der Aerosole an den Wassertropfen können die gebundenen Aerosole ihre Schwebfähigkeit verlieren. Hieraus lässt es sich auch ableiten, dass es prinzipiell von Vorteil ist, einen möglichst dichten Wasserschleier mit möglichst wenig wassertropfenfreiem Zwischenraum zwischen seinen Wassertropfen bereitzustellen, um einen möglichst großen Anteil der Aerosole von der Außenatmosphäre fernzuhalten. Mit anderen Worten ist der Wasserschleier umso undurchlässiger für Aerosole je dichter er ist. Idealerweise können die Wassertropfen im Wasserschleier zusammenhängen und so einen zwischenraumfreien Wasserschwall ausbilden. Somit wird ermöglicht, einen Austrag von beim Sanieren des Kanals anfallenden und umweit- und gesundheitsschädlichen Aerosolen in die äußere Umgebung zu vermeiden oder zumindest zu vermindern. Zugleich ist der Wasserschleier technisch einfach zu erzeugen und rückstandsfrei wieder zu entfernen, wenn die Sanierung des Kanals abgeschlossen ist.

Zweckmäßig wird die Maßnahme b1) wenigstens bis zum Abschluss der Maßnahme c), also bis das Sanieren mittels des Sanierungsroboters abgeschlossen wurde, durchgeführt. Anschließend kann der Sanierungsroboter in Maßnahme d) aus dem Kanal entfernt und die Kanalöffnung schließlich verschlossen werden, sodass vorteilhaft ein Zwischenzeitintervall mit freiliegender und aerosoldurchlässiger Kanalöffnung zumindest verkürzt werden kann.

Gemäß einer bevorzugten Weiterbildung des Verfahrens werden in Maßnahme c) der Sanierungsroboter sowie eine an diesen angeschlossene Schleppleitung mittels des Wasserschleiers gereinigt. Die Schleppleitung kann aus einer einzigen Einzelleitung bestehen oder kann ein Bündel aus zwei oder mehr Einzelleitungen sein, von welchen je eine zum Steuern es Sanierungsroboters, zum Versorgen des Sanierungsroboters mit elektrischer Energie, zum Versorgen des Sanierungsroboters mit Druckluft, zum Versorgen des Sanierungsroboters mit Hydrauliköl oder/und zum Versorgen des Sanierungsroboters mit Wasser dienen kann. Es versteht sich, dass auch lediglich eine Auswahl der voranstehend aufgezählten Einzelleitungen zur Schleppleitung gebündelt sein können, wobei auf einzelne der aufgezählten Einzelleitungen verzichtet sein kann. Somit wird ein gesonderter Reinigungsvorgang zur Reinigung des Sanierungsroboters und der Schleppleitung nach Abschluss der Kanalsanierung obsolet.

Bei einer weiteren vorteilhaften Weiterbildung des Verfahrens wird nach einem ersten Durchlauf der Maßnahmen des Verfahrens ein weiterer Abschnitt des Kanals mittels eines zweiten Durchlaufs der Maßnahmen des Verfahrens saniert. Dabei mutiert ein stromauf oder stromab des Zugangsschachts vorhandener Parallelschacht, der vom Kanal abzweigt und der den Kanal mit der äußeren Umgebung fluidisch verbindet, zum Zugangsschacht für den zweiten Durchlauf. Dies erlaubt vorteilhaft die abschnittsweise Sanierung von Kanälen, die länger sind als eine Reichweite des Sanierungsroboters.

Bei einer bevorzugten Ausführungsform des Verfahrens ist der Zugangsschacht stromauf des Sanierungsabschnitts angeordnet, so dass der Sanierungsroboter nach dem Einbringen in den Sanierungsabschnitt gemäß Maßnahme b) zum Sanieren des Sanierungsabschnitts diesen zum Sackfilter hin, insbesondere bis zum Sackfilter, befährt.

Besonders bevorzugt befährt der Kanalroboter den Sanierungsabschnitt entlang der Kanalströmungsrichtung. Dadurch lässt sich erreichen, dass die beim Sanieren, insbesondere beim nassen abrasiven Behandeln, anfallende Ablösungen auf den Sanierungsroboter treffen und diesen beschädigen oder gar zerstören können.

Bevorzugt kann der Kanalroboter den Sanierungsabschnitt entlang der Kanalströmungsrichtung zumindest vom Zugangsschacht bis zum Ausgangsschacht bzw. Parallelschacht befahren. Auf diese Weise wird eine vollständige Sanierung des Sanierungsabschnitts sichergestellt.

Zusammenfassend:
Die Erfindung betrifft ein Verfahren zum Sanieren eines Kanals, der über einen abzweigenden Zugangsschacht mit einer äußeren Umgebung fluidisch verbunden ist, wobei der Kanal entlang einer Kanalströmungsrichtung von einer Flüssigkeit durchströmbar ist, umfassend nachfolgende Maßnahmen: a) Festlegen eines mit dem Zugangsschacht fluidisch kommunizierenden Sanierungsabschnitts des Kanals, wobei ein Sackfilter an einem bezüglich der Kanalströmungsrichtung stromab gelegenen Ende des Sanierungsabschnitts angeordnet wird; b) Einbringen eines Sanierungsroboters in den Sanierungsabschnitt über den Zugangsschacht; c) Sanieren des Sanierungsabschnitts des Kanals mittels des Sanierungsroboters.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: beispielhaft eine Momentaufnahme eines zu sanierenden Kanals während der Durchführung eines erfindungsgemäßen Verfahrens zum Sanieren des Kanals,
- Fig. 2: beispielhaft ein Ablaufdiagramm des anhand Figur 1 veranschaulichten Verfahrens.

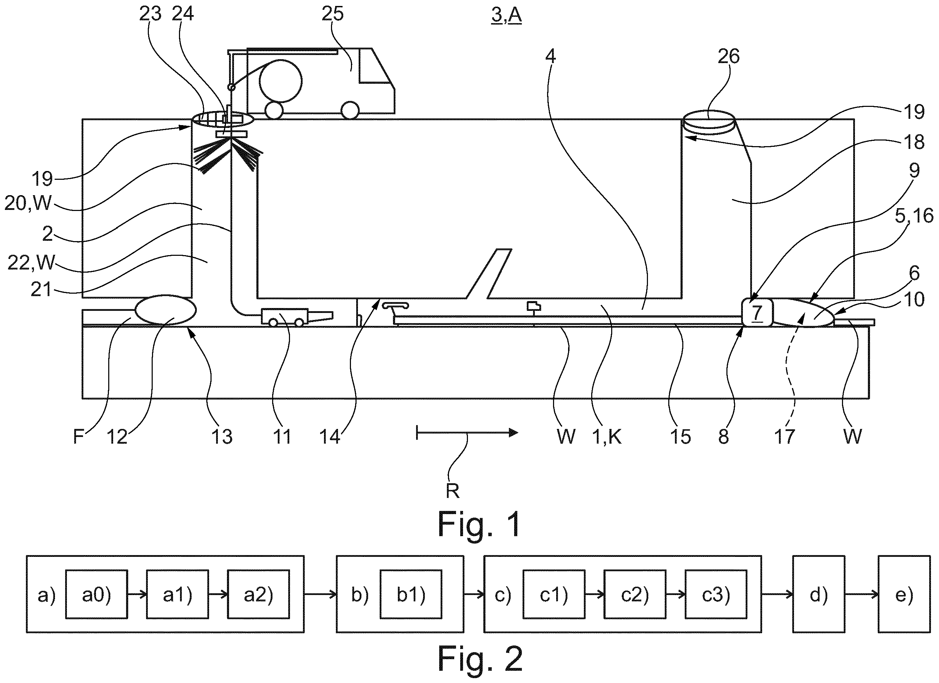

Die Figur 1 zeigt in der Art eine Momentaufnahme einen Kanal 1, der mittels eines nachfolgend beispielhaft erläuterten Verfahrens gemäß der Erfindung saniert wird. Das erfindungsgemäße Verfahren dient also zum Sanieren des Kanals 1. Beispielsweise dient das Verfahren zum abschnittsweisen Sanieren des Kanals 1. Der Kanal 1 ist über einen abzweigenden Zugangsschacht 2 mit einer äußeren Umgebung 3 fluidisch verbunden. Dabei ist der Kanal 1 entlang einer Kanalströmungsrichtung R von einer Flüssigkeit F durchströmbar. Der Kanal 1 kann in der Kanalströmungsrichtung R abschüssig sein, was in der lediglich grobschematischen Darstellung Figur 1 aber nicht erkennbar ist. Die Flüssigkeit F kann den Kanal 1 schwerkraftgetrieben durchströmen. Der Kanal 1 kann ein Abwasserkanal sein. Die Flüssigkeit F kann Abwasser sein.

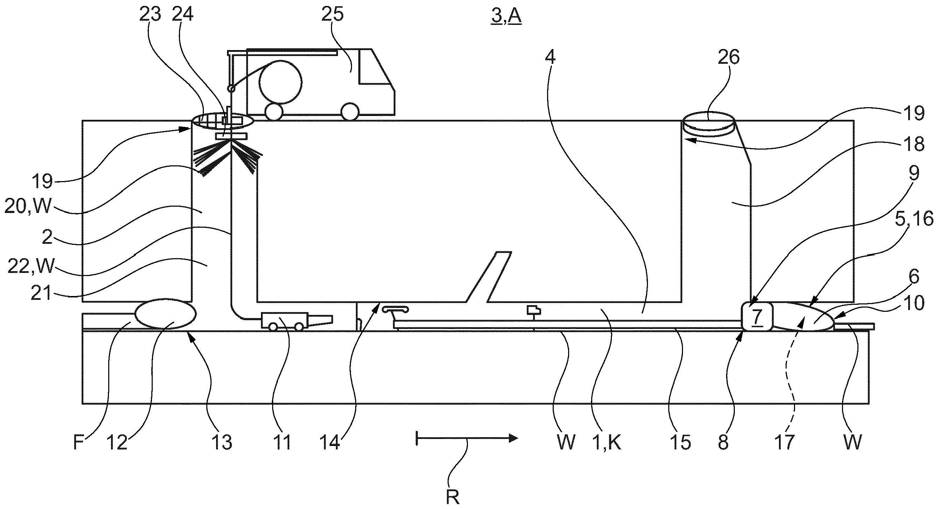

Die Figur 2 illustriert mittels eines Ablaufdiagramms beispielhaft einen Ablauf des erfindungsgemäßen Verfahrens zum Sanieren des Kanals 1, der in der Figur 1 gezeigt ist. Demnach umfasst das Verfahren eine erste Maßnahme a), gemäß welcher ein Sanierungsabschnitt 4 des Kanals 1 festgelegt wird. Der Sanierungsabschnitt 4 des Kanals 1 kommuniziert fluidisch mit dem Zugangsschacht 2. Dabei wird in Maßnahme a) ein Sackfilter 5 mit einer wasserdurchlässigen Hülle 6, die einen Sackinnenraum 7 begrenzt, an einem bezüglich der Kanalströmungsrichtung R stromab gelegenen Ende 8 des Sanierungsabschnitts 4 angeordnet. Der Sackfilter 5 wird derart angeordnet, dass eine Rohseite 9 des Sackfilters 5, an welcher der Sackinnenraum 7 des Sackfilters 5 geöffnet ist, dem Sanierungsabschnitt 4 zugewandt und eine Reinseite 10 des Sackfilters 5 dem Sanierungsabschnitt 4 abgewandt ist. Der Sackfilter 5 bzw. seine Hülle 6 trennt die Roh- von der Reinseite 9, 10.

Gemäß den Figuren 1 und 2 umfasst das Verfahren außerdem eine zweite Maßnahme b), gemäß welcher ein Sanierungsroboter 11 in den Sanierungsabschnitt 4 über den Zugangsschacht 2 eingebracht wird. In der Momentaufnahme der Figur 1 befindet sich der Sanierungsroboter 1 bereits im Sanierungsabschnitt 4 des Kanals 1. Das Verfahren umfasst ferner eine dritte Maßnahme c), in welcher der Sanierungsabschnitt 4 des Kanals 1 mittels des Sanierungsroboters 11 saniert wird. Zum Sanieren des Sanierungsabschnitts 4 kann der Sanierungsroboter 11 insbesondere Sanierungsarbeiten am Kanal 1 vornehmen, die beispielsweise eine Sanierung von Rissen, Löchern, Undichtigkeiten, Zuläufen, oder/und Hindernissen sowie eine Anbindung von Linern, Kurzliner oder/und Manschetten sowie Vorarbeiten für Liner, Kurzliner oder/und Manschetten umfassen. Außerdem können die Sanierungsarbeiten ein Fräsen, Abtragen von Ablagerungen und losen Teilen, Spachteln von Harzen, Verpressen von Mörteln oder Harzen sowie ein Einbringen von mit Harz getränkten Laminaten umfassen. Der Sanierungsroboter 11 kann von der äußeren Umgebung 3 des Kanals 1 aus gesteuert werden. Optional umfasst das Verfahren eine vierte Maßnahme d), die zeitlich nach Maßnahme c) durchgeführt wird. Gemäß der vierten Maßnahme d) wird der Sanierungsroboter 11 aus dem Kanal 1 über den Zugangsschacht 2 entfernt.

Die Figuren 1 und 2 lassen darüber hinaus erkennen, dass die Maßnahme a) zwei Untermaßnahmen a1) und a2) umfasst. Gemäß einer ersten Untermaßnahme a1) erfolgt ein Anordnen einer beispielsweise flüssigkeitsundurchlässigen Staueinrichtung 12 an einem bezüglich der Kanalströmungsrichtung R stromauf gelegenen Ende 13 des Sanierungsabschnitts 4. Dabei wird die Staueinrichtung 12 zum Beispiel über den Zugangsschacht 2 in den Kanal 1 eingebracht. Gemäß einer zweiten Untermaßnahme a2) wird die Flüssigkeit F stromauf der Staurichtung 12 angestaut, sodass ein Pegel an Flüssigkeit F im Sanierungsabschnitt 4 reduziert wird. Beispielsweise wird die Flüssigkeit F in Maßnahme a2) derart angestaut, dass der Pegel an Flüssigkeit im Sanierungsabschnitt 4 ein Nullpegel wird, wie dies in der Momentaufnahme der Figur 1 erkennbar ist, wo der Sanierungsabschnitt 4 im Wesentlichen frei von der Flüssigkeit F ist. Beispielsweise wird der Kanal 1 an seinem stromauf gelegenen Ende 13 mittels der Staueinrichtung 12 blockiert.

Den Figuren 1 und 2 ist ferner zu entnehmen, dass die Maßnahme c) des Verfahrens eine erste Untermaßnahme c1) umfasst, gemäß welcher ein nasses und abrasives Behandeln, beispielsweise ein Abfräsen, einer Kanalwand 4 des Kanals 1 erfolgt. Die Maßnahme c1) wird beispielsweise mittels des Sanierungsroboters 11 vorgenommen. Die Kanalwand 4 umfasst beispielsweise ein asbesthaltiges Material wie Asbestbeton oder besteht aus asbesthaltigem Material wie Asbestbeton. Das nasse abrasive Behandeln in Maßnahme c1 erfolgt beispielsweise mittels Wasser W und im gezeigten Beispiel mechanisch, wobei beim abrasiven Behandeln anfallende Ablösungen 15 von der Kanalwand 14 mittels des Wassers W von der Kanalwand 14 abgespült werden. Die Maßnahme c) umfasst außerdem eine zweite Untermaßnahme c2), gemäß welcher das Wasser W mitsamt den davon mitgeführten Ablösungen 15 in der Kanalströmungsrichtung R geleitet wird. Darüber hinaus umfasst die Maßnahme c) eine dritte Untermaßnahme c3). In dieser dritten Untermaßnahme c3) werden die Ablösungen 15 aus dem dieselben mitführenden Wasser W mittels des Sackfilters 5 gefiltert. Dabei werden die Ablösungen 15 derart aus dem Wasser W gefiltert, dass die Ablösungen 15 an der Rohseite 9 des Sackfilters 5 gesammelt werden. Beispielsweise werden asbesthaltige Anteile der Ablösungen 15 an der Rohseite 9 des Sackfilters 5 gesammelt. Zum Beispiel werden die Ablösungen 15 bzw. deren asbesthaltige Anteile im Sackinnenraum 7 des Sackfilters 5 gesammelt.

Aus den Figuren 1 und 2 ergibt es sich außerdem, dass die Hülle 6 des Sackfilters 5 ein Filtermedium 16 umfasst oder aus einem Filtermedium 16 besteht. Alternativ oder zusätzlich wird/ist der Sackinnenraum 7 des Sackfilters 5 wenigstens teilweise mit einem Filtermittel 17 befüllt. Dieses Filtermittel 17 kann ein Flockschlamm sein. Das Filtermittel 17 kann schüttfähig, also rieselfähig sowie - alternativ oder zusätzlich - fließfähig sein. Das Filtermedium 16 bzw. das Filtermittel 17 ist für die Flüssigkeit F und für das Wasser W durchlässig und für die Ablösungen 15, vor allem für die asbesthaltigen Anteile der Ablösungen 15, undurchlässig.

Gemäß den Figuren 1 und 2 kann das Verfahren eine fünfte Maßnahme e) umfassen. In dieser fünften Maßnahme e) wird der Sackfilter 5 über den Zugangsschacht 2 oder über einen stromab gelegenen fluidisch mit dem Kanal 1 kommunizierenden Parallelschacht 18 (gezeigt in Figur 1) entfernt. Auch der Sanierungsroboter kann in einer Abwandlung der optionalen Maßnahme d) über den Parallelschacht 18 entfernt werden. Beispielsweise erfolgt die Handhabung des Sackfilters 5 im Kanal 1 in Maßnahme a) sowie - alternativ oder zusätzlich - in Maßnahme e) mittels des Sanierungsroboters 11. Der Sackfilter 5 kann also mittels des Sanierungsroboters 11 zum stromab gelegenen Ende 8 des Sanierungsabschnitts 4 transportiert und dort abgelegt bzw. angeordnet werden. Die Staueinrichtung 12 kann mittels des Sanierungsroboters 11 am stromauf gelegenen Ende 13 angeordnet werden. Zwischen Zugangssacht 2 und Parallelschacht 18 können weitere Schächte vom Kanal 1 abzweigen, die wahlweise als Zugangs- oder Parallelschacht 2, 18 für das vorliegende Verfahren verwendet werden können.

Die Figuren 1 und 2 zeigen darüber hinaus, dass die Maßnahme a) eine weitere Untermaßnahme a0) umfasst, die zweckmäßig ganz zu Beginn des Verfahrens durchgeführt wird. Gemäß der Untermaßnahme a0) wird eine Schachtöffnung 19 des Zugangsschachts 2 freigelegt. Dabei kann ein die Schachtöffnung 19 des Zugangsschachts 2 abdeckender Schachtdeckel 26 abgenommen werden, sodass die Schachtöffnung 19 freigelegt ist. Gemäß der Figuren 1 ist der Schachtdeckel 26 bereits von der Schachtöffnung 19 des Zugangsschachts 2 abgenommen. Im Gegensatz dazu ist die Schachtöffnung 19 des Parallelschachts 18 in Figur 1 mittels eines Schachtdeckels 26 abgedeckt. Der Zugangsschacht 2 ist mittels der Schachtöffnung 19 mit der äußeren Umgebung 4 verbunden.

Außerdem umfasst die Maßnahme b) gemäß den Figuren 1 und 2 beispielsweise Untermaßnahme b1), gemäß welcher ein Wasserschleier 20 erzeugt und aufrechterhalten wird. Der Wasserschleier 20 verschließt die Schachtöffnung 19 des Zugangsschachts 2 wenigstens teilweise, beispielsweise vollständig, für Aerosole 21 undurchlässig. Die Untermaßnahme b1) kann beispielsweise zeitlich nach dem Einbringen des Sanierungsroboters 11 in den Sanierungsabschnitt 4 erfolgen. Besagte Aerosole 21 können beim nassen und abrasiven Behandeln der Kanalwand 14 in Maßnahme c1) anfallen. Falls die Kanalwand 14 asbesthaltiges Material wie Asbestbeton umfasst oder aus asbesthaltigem Material wie Asbestbeton besteht, können die Aerosole 21 asbesthaltig sein. Die Aerosole 21 können schwebfähige Staubkörnchen oder Flüssigkeitströpfchen sein, die beim Sanieren des Kanals 1 infolge abrasiver Bearbeitung der Kanalwand 14 des Kanals 1 anfallen. Mittels des Wasserschleiers 20 kann ein Austritt der Aerosole 21 aus dem Kanal 1 bzw. dem Schacht 2 in die äußere Umgebung 3 verhindert oder zumindest erschwert werden.

Beispielsweise kann in Maßnahme b1) eine Atmosphären-Trenneinrichtung 23 an der Schachtöffnung 19 des Zugangsschachts 2 angebracht werden. Die Atmosphären-Trenneinrichtung 23 kann eine im Kanal 1 und im Zugangsschacht 2 vorhandene Kanalatmosphäre K von einer in der äußeren Umgebung 3 vorhandenen Außenatmosphäre A trennen. Die Kanalatmosphäre K kann unterhalb einer Schachtöffnung 19des Schachtes 3 im Schacht 3 in die Außenatmosphäre A übergehen. Die Atmosphären-Trenneinrichtung 23 kann in die Schachtöffnung 19 schachtdeckelartig eingesetzt werden. Die Atmosphären-Trenneinrichtung 23 kann eine von Wasser durchströmbare Düse 24 umfassen, die einen Düsenausgang aufweist. Unter einer Düse 24 kann dabei jegliche Austrittsverengung eines von dem Wasser W durchströmbaren Querschnitts verstanden werden. Eine solche Austrittsverengung kann durch eine Durchgangsöffnung oder durch ein gesondertes Düsenelement ausgebildet sein. Im Betrieb der Atmosphären-Trenneinrichtung 23 kann düsenausgangsseitig der Wasserschleier 20 aus dem den Düsenausgang verlassenden Wasser W gebildet werden. Die Düse 24 kann eine Flachdüse sein, die Wassertropfen fächerartig austrägt. Beispielsweise umfasst die Atmosphären-Trenneinrichtung 23 eine Vielzahl an Düsen 24. Beispielsweise wird die Maßnahme b1) bis zum Abschluss der Maßnahme c), also bis zum Abschluss der Kanalsanierung mittels des Sanierungsroboters, ausgeführt.

In der Figur 1 ist ferner erkennbar, dass am Sanierungsroboter 11 eine Schleppleitung 22 angeschlossen ist, welche zur Versorgung des Sanierungsroboters 11 mit elektrischer Energie sowie - jeweils alternativ oder zusätzlich - Wasser W, Luft - insbesondere Druckluft, Hydraulikflüssigkeit, Reinigungszusatz und Sanierungsmittel dienen kann. Die Schleppleitung 22 kann aus einer einzigen Einzelleitung bestehen oder ein Bündel aus zwei oder mehr Einzelleitungen sein, von welchen je eine zum Steuern es Sanierungsroboters 11, zum Versorgen des Sanierungsroboters 11 mit elektrischer Energie, zum Versorgen des Sanierungsroboters 11 mit Druckluft, zum Versorgen des Sanierungsroboters 11 mit Hydrauliköl oder/und zum Versorgen des Sanierungsroboters 11 mit Wasser W dienen kann.

Es versteht sich, dass auch lediglich eine Auswahl der voranstehend aufgezählten Einzelleitungen zur Schleppleitung 22 gebündelt sein können, wobei auf einzelne der aufgezählten Einzelleitungen verzichtet sein kann.

Mittels des Sanierungsroboters 11 durchführbare Sanierungsarbeiten können dabei eine Sanierung von Rissen, Löchern, Undichtigkeiten, Zuläufen, oder/und Hindernissen sowie eine Anbindung von Linern, Kurzliner oder/und Manschetten sowie Vorarbeiten für Liner, Kurzliner oder/und Manschetten umfassen. Außerdem können die Sanierungsarbeiten ein Fräsen, Abtragen von Ablagerungen und losen Teilen, Spachteln von Harzen, Verpressen von Mörteln oder Harzen sowie ein Einbringen von mit Harz getränkten Laminaten umfassen. Die Schleppleitung 22 kann vom Sanierungsroboter 11, der einen Antrieb zur Fortbewegung im Kanal 1 aufweist, mitgeschleppt werden. Dabei ist ein dem Sanierungsroboter 11 zugewandter Abschnitt der Schleppleitung 22 durch die Atmosphären-Trenneinrichtung 23 und durch den Wasserschleier 20 hindurch geführt.

Dabei wird gemäß den Figuren 1 und 2 in Untermaßnahme b1) des Verfahrens die an am Sanierungsroboter 11 angeschlossene Schleppleitung 22 mittels des Wasserschleiers 20 gereinigt. Beispielsweise wird die Schleppleitung 22 während der Durchführung von Maßnahme c), also beim Sanieren des Sanierungsabschnitts 4, mittels des Wasserschleiers 20 gereinigt. Die Atmosphären-Trennvorrichtung 23 und ihr Wasserschleier 20 können für die an dem Sanierungsroboter 11 angeschlossene Schleppleitung 22 durchlässig sein, sodass die Schleppleitung 22 mittels des Wasserschleiers 20 gereinigt werden kann, wenn sie durch den Wasserschleier 20 bewegt wird.

Gemäß Figur 1 ist die Schleppleitung 22 an einem vom Sanierungsroboter 11 abgewandten Ende an einer Versorgungseinheit 25 angeschlossen. Die Versorgungseinheit 25 kann Teil eines Kraftfahrzeugs sein Die Versorgungseinheit 25 kann eine Wasserquelle umfassen oder sein. Die Versorgungseinheit 25 kann Wasser W mit einem Druck von 1 bis 150 bar bereitstellen. Dabei kann die Atmosphären-Trennvorrichtung 23 das Wasser W zum Bilden des Wasserschleiers 20 von derselben oder einer anderen Versorgungseinheit wie einem stationären Hydranten beziehen. Es versteht sich, dass auch die Schleppleitung 22 an einem stationären Hydranten angeschlossen sein kann. Somit können Wasserleitungen zwischen Versorgungseinheit 25, Sanierungsroboter 11 und Atmosphären-Trenneinrichtung 23 besonders kurz gehalten werden.

In einer Variante des Beispiels wird nach einem ersten Durchlauf der Maßnahmen des Verfahrens ein weiterer Abschnitt des Kanals 1 mittels eines zweiten Durchlaufs der Maßnahmen des Verfahrens saniert. Dabei mutiert der in Figur 1 stromab des Zugangsschachts 2 vorhandene Parallelschacht 18, der vom Kanal 1 abzweigt und der den Kanal 1 mit der äußeren Umgebung 3 fluidisch verbindet, zum Zugangsschacht 2 für den zweiten Durchlauf. Es versteht sich, dass der Parallelschacht, der für den zweiten Durchlauf zum Zugangsschacht 2 mutiert alternativ auch stromab des Zugangsschachts 2 des ersten Durchlaufs vorhanden sein kann.

Gemäß Figur 2 werden die Maßnahmen des Verfahrens beispielsweise mit folgender zeitlichen Reihenfolge begonnen - a): a0), a1), a2); b): b1); c): c1), c2), c3); d); e). Die einzelnen Maßnahmen oder Untermaßnahmen müssen ausdrücklich nicht abgeschlossen sein, bevor die nächste Maßnahme oder Untermaßnahme begonnen werden kann. Einzelne Maßnahmen oder Untermaßnahmen können zeitgleich ausgeführt werden, sofern sich dies als zweckdienlich erweist.

Der Zugangsschacht 2 kann wie dargestellt stromauf des Sanierungsabschnitts 4 angeordnet, sein so dass der Sanierungsroboter 11 nach dem Einbringen in den Sanierungsabschnitt gemäß Maßnahme b) zum Sanieren des Sanierungsabschnitts 4 diesen zum Sackfilter 5 hin befährt.

Zweckmäßig befährt der Kanalroboter 4 den Sanierungsabschnitt 4 entlang der Kanalströmungsrichtung R . Dadurch lässt sich erreichen, dass die beim Sanieren, insbesondere beim nassen abrasiven Behandeln, anfallenden Ablösungen auf den Sanierungsroboter treffen und diesen beschädigen oder gar zerstören können.

Bevorzugt kann der Kanalroboter 4 dabei den den Sanierungsabschnitt 4 entlang der Kanalströmungsrichtung R zumindest vom Zugangsschacht 2 bis zum Ausgangsschacht bzw. Parallelschacht 18 befahren. Auf diese Weise wird eine vollständige Sanierung des Sanierungsabschnitts sichergestellt.

## Patentansprüche

1. Verfahren zum, insbesondere abschnittsweisen, Sanieren eines Kanals (1), der über einen abzweigenden Zugangsschacht (2) mit einer äußeren Umgebung (3) fluidisch verbunden ist, wobei der Kanal (1) entlang einer Kanalströmungsrichtung (R), in welcher der Kanal (1) bevorzugt abschüssig ist, von einer Flüssigkeit (F) durchströmbar ist, umfassend nachfolgende Maßnahmen:
a) Festlegen eines mit dem Zugangsschacht (2) fluidisch kommunizierenden Sanierungsabschnitts (4) des Kanals (1), wobei ein Sackfilter (5) mit einer wasserdurchlässigen Hülle (6), die einen Sackinnenraum (7) begrenzt, an einem bezüglich der Kanalströmungsrichtung (R) stromab gelegenen Ende (8) des Sanierungsabschnitts (4) angeordnet wird, sodass eine Rohseite (9) des Sackfilters (5), an der der Sackinnenraum (7) des Sackfilters (5) geöffnet ist, dem Sanierungsabschnitt (4) zugewandt und eine Reinseite (10) des Sackfilters (5) dem Sanierungsabschnitt (4) abgewandt ist,
b) Einbringen eines Sanierungsroboters (11) in den Sanierungsabschnitt (4) durch den Zugangsschacht (2),
c) Sanieren des Sanierungsabschnitts (4) des Kanals (1) mittels des Sanierungsroboters (11).

2. Verfahren nach Anspruch 1,
**dadurch gekennzeichnet, dass**
die Maßnahme a) folgende Untermaßnahmen a1) und a2) umfasst:
a1) Anordnen einer, insbesondere flüssigkeitsundurchlässigen, Staueinrichtung (12) an einem bezüglich der Kanalströmungsrichtung (R) stromauf gelegenen Ende (13) des Sanierungsabschnitts (4), wobei die Staueinrichtung (12) vorzugsweise über den Zugangsschacht (2) in den Kanal (1) eingebracht wird,
a2) Anstauen der Flüssigkeit (F) stromauf der Staueinrichtung (12), sodass ein Pegel an Flüssigkeit (F) im Sanierungsabschnitt (4) reduziert, vorzugsweise vollständig unterbunden, wird.

3. Verfahren nach einem der vorhergehenden Ansprüche,
**dadurch gekennzeichnet, dass**
die Maßnahme c) folgende Untermaßnahme c1) umfasst:
c1) Nasses und abrasives Behandeln, insbesondere Abfräsen, einer Kanalwand (4), insbesondere einer Kanalwand (4) umfassend asbesthaltiges Material oder bestehend aus asbesthaltigem Material, des Kanals (1).

4. Verfahren nach Anspruch 3,
**dadurch gekennzeichnet, dass**
das nasse abrasive Behandeln in Untermaßnahme c1) mittels Wasser (W), sowie bevorzugt mechanisch, erfolgt, wobei beim abrasiven Behandeln anfallende Ablösungen (15) von der Kanalwand (14) mittels des Wassers (W) von der Kanalwand (14) abgespült werden.

5. Verfahren nach Anspruch 3 oder 4,
**dadurch gekennzeichnet, dass**
die Maßnahme c) folgende Untermaßnahmen umfasst:
c2) Leiten des Wassers (W) mitsamt den davon mitgeführten Ablösungen (15) in der Kanalströmungsrichtung (R).

6. Verfahren nach einem der Ansprüche 3 bis 5, bei Rückbezug auf Anspruch 3, **dadurch gekennzeichnet, dass**
die Maßnahme c) folgende weitere Untermaßnahme c3) umfasst:
c3) Filtern der Ablösungen (15) aus dem dieselben mitführenden Wasser (W) mittels des Sackfilters (5), sodass die Ablösungen (15), insbesondere deren asbesthaltigen Anteile, an der Rohseite (9) des Sackfilters (5), insbesondere im Sackinnenraum (7), gesammelt werden.

7. Verfahren nach Anspruch 5 oder 6,
**dadurch gekennzeichnet**, dass-
- die Hülle (6) des Sackfilters (5) ein Filtermedium (16) umfasst oder aus dem Filtermedium (16) besteht oder/und der Sackinnenraum (7) wenigstens teilweise mit einem, insbesondere schüttfähigen, Filtermittel (17) befüllt wird oder befüllt ist,
- das Filtermedium (16) oder/und das Filtermittel (17) für die Flüssigkeit (F) und für das Wasser (W) durchlässig und für die Ablösungen (15), insbesondere asbesthaltige Anteile der Ablösungen (15), undurchlässig ist.

8. Verfahren nach einem der vorhergehenden Ansprüche,
**dadurch gekennzeichnet, dass**
das Verfahren folgende weitere Maßnahme umfasst:
e) Entfernen des Sackfilters (5) über den Zugangsschacht (2) oder einen stromab gelegenen fluidisch mit dem Kanal (1), insbesondere mit dem Sanierungsabschnitt (4), kommunizierenden Ausgangsschacht, insbesondere Parallelschacht (18).

9. Verfahren nach einem der vorhergehenden Ansprüche, insbesondere nach 8, **dadurch gekennzeichnet, dass**
die Handhabung des Sackfilters (5) in Maßnahme a) oder/und in Maßnahme e) im Kanal (1) mittels des Sanierungsroboters (11) erfolgt.
- vorzugsweise das Sackfilter vor Durchführung von Maßnahme c) mittels des Sanierungsroboters (11) zum Ende (8) des Sanierungsabschnitts (4) transportiert wird.

10. Verfahren nach einem der vorhergehenden Ansprüche,
**dadurch gekennzeichnet, dass**
die Maßnahme a) folgende Untermaßnahme a0) umfasst:
a0) Freilegen einer Schachtöffnung (19) des Zugangsschachts (2), mittels welcher der Zugangsschacht (2) mit der äußeren Umgebung (4) verbunden ist.

11. Verfahren nach einem der vorhergehenden Ansprüche,
**dadurch gekennzeichnet, dass**
die Maßnahme b) folgende Untermaßnahme b1) umfasst, die vorzugsweise zeitlich nach dem Einbringen des Sanierungsroboters (11) in den Sanierungsabschnitt (4) durchgeführt wird,
b1) Erzeugen und Aufrechterhalten eines Wasserschleiers (20), der eine Schachtöffnung (19) des Zugangsschachtes (2) für Aerosole (21) zumindest teilweise, vorzugsweise vollständig, undurchlässig verschließt,
- bevorzugt die Untermaßnahme b1) wenigstens bis zum Abschluss der Maßnahme c) durchgeführt wird,
- besonders bevorzugt in Untermaßnahme c) eine am Sanierungsroboter (11) angeschlossene Schleppleitung (22) mittels des Wasserschleiers (20) gereinigt wird.

12. Verfahren nach einem der vorhergehenden Ansprüche,
**dadurch gekennzeichnet, dass**
- nach einem ersten Durchlauf der Maßnahmen des Verfahrens ein weiterer Abschnitt des Kanals (1) mittels eines zweiten Durchlaufs der Maßnahmen des Verfahrens saniert wird,
- wobei ein stromauf oder stromab des Zugangsschachts (2) vorhandener Parallelschacht (18), der vom Kanal (1) abzweigt und der den Kanal (1) mit der äußeren Umgebung (3) fluidisch verbindet, zum Zugangsschacht (2) für den zweiten Durchlauf mutiert.

13. Verfahren nach einem der vorhergehenden Ansprüche,
**dadurch gekennzeichnet, dass**
der Zugangsschacht (2) stromauf des Sanierungsabschnitts (4) angeordnet ist, so dass der Sanierungsroboter (11) nach dem Einbringen in den Sanierungsabschnitt gemäß Maßnahme b) zum Sanieren des Sanierungsabschnitts (4) diesen zum Sackfilter (5) hin befährt.

14. Verfahren nach einem der vorhergehenden Ansprüche,
**dadurch gekennzeichnet, dass**
der Kanalroboter (4) den Sanierungsabschnitt (4) entlang der Kanalströmungsrichtung (R) befährt.

15. Verfahren nach einem der Ansprüche 12 bis 14,
**dadurch gekennzeichnet, dass**
der Kanalroboter (4) den Sanierungsabschnitt (4) entlang der Kanalströmungsrichtung (R) zumindest vom Zugangsschacht (2) bis zum Ausgangsschacht bzw. Parallelschacht (18) befährt.
